(19) Europäisches Patentamt
European Patent Office
Office européen des brevets

(11) **EP 1 887 787 A2**

(12) **EUROPEAN PATENT APPLICATION**

(43) Date of publication:
**13.02.2008 Bulletin 2008/07**

(51) Int Cl.:
*H04N 1/60* *(2006.01)*

(21) Application number: **07113782.2**

(22) Date of filing: **03.08.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **08.08.2006 JP 2006215858**
**28.06.2007 JP 2007170230**

(71) Applicant: **Canon Kabushiki Kaisha**
**Ohta-Ku,**
**Tokyo 146-8501 (JP)**

(72) Inventors:
• **MISUMI, Mizue**
**Ohta-ku Tokyo (JP)**

• **SAITO, Kazuhiro**
**Ohta-ku Tokyo (JP)**
• **NISHIKAWA, Hiromitsu**
**Ohta-ku Tokyo (JP)**
• **FAN, Yingying**
**Ohta-ku Tokyo (JP)**

(74) Representative: **Sharp, Alan Cooper**
**Canon Europe Ltd.**
**European Patent Department**
**6 Roundwood Avenue**
**Stockley Park**
**Middlesex, Uxbridge UB11 1JA (GB)**

(54) **Profile forming method and printing system**

(57) A profile forming method includes a category obtaining step of obtaining a category of a printing medium, a profile obtaining step of obtaining a profile corresponding to the category of the printing medium, a total colorant amount obtaining step of obtaining a total colorant amount corresponding to the printing medium, and a profile forming step of forming another profile adapted for the printing medium based on both the profile obtained in the profile obtaining step and the total colorant amount.

FIG. 1

**Description**

BACKGROUND OF THE INVENTION

Field of the Invention

The present invention relates to a profile forming method, a profile forming program, and a printing system.

Description of the Related Art

Widespread use of digital still cameras and scanners has increased opportunities for users to print images for artistic appreciation and long-term storage. A demand for printing of images in more desirable colors has also increased correspondingly. In addition, development of printers toward higher resolution and higher accuracy to be adapted for printing on larger-size paper, for example, has increased opportunities that professional users, such as graphic artists and photographers, employ printers as tools for creating artistic works. Those professional users create works by using various categories (types) of paper, including fine art paper and thick paper. In order to meet demands of such professional users, printer makers have increased the number of categories of paper dedicated for the printers.

However, it is very difficult for printer makers to prepare printer profiles adapted for all categories of paper demanded by the users. Among commercially available paper, there are still many categories of paper that are not yet specified to be adaptable by the printer makers. Further, profiles of image output devices for handling prints are generally formed based on a color reproduction characteristic under standard illumination. Accordingly, the profile prepared by the printer maker does not always reflect a color reproduction characteristic appearing in an environment where an output image is actually observed, and a satisfactory color reproduction result cannot be obtained depending on the observation environment.

When an image is printed out using paper not adapted for the printer used, the following three major problems may occur. A first problem is that, because a user's printing condition (combination between the printer and the paper) is unknown, proper control cannot be performed for a colorant amount, i.e., an amount of a colorant, e.g., ink, which can be accepted by the paper as a target for printing of the image. A second problem is that a color development characteristic of the paper is unknown and optimum color separation in consideration of the color development characteristic cannot be performed. A third problem is that the image cannot be printed out in a satisfactory color expected by the user.

With the first one of the above-mentioned three problems, i.e., incapability of performing the proper control of the colorant amount, the following undesired results are caused. For example, when the colorant amount is too much with respect to proper one, scattering or a blur occurs due to ink that cannot be fully accepted by the paper. When the colorant amount is too small with respect to the proper one, a printable color range is limited and a color reproduction range under the user's printing condition cannot be effectively utilized.

With the second problem that the color development characteristic of the paper is unknown and optimum color separation cannot be performed, the following two drawbacks are caused. First, the user is often obliged to observe discontinuity of color in, e.g., a gradation image. Secondly, in spite of the paper being selected by the user based on due consideration, characteristics of the paper cannot be fully utilized. In general, the user selects paper used for printing after imaging a work to be created by the user. Therefore, the reproduction purpose is changed to a large extent depending on the paper used in the work. The categories of paper supported by the printer includes, e.g., glossy paper, art paper, and plain paper. The glossy paper is suitable for printing a photo in a satisfactory manner. The art paper is used to create an artistic work without impairing the attractive specific feature of the paper material. The plain paper is suitable for printing general documents in a satisfactory manner. Stated another way, using paper for which the profile is not prepared accompanies with a possibility that the printing purpose depending on the paper is not reliably achieved.

The above-described two problems are related to details of printer control, and the solution of those problems generally requires detailed study regarding the combination of printer and paper, which should be conducted by a person having expert knowledge with regards to printers. For that reason, it is very difficult for a user not having the required expert knowledge to overcome those two problems.

For the third problem - that the image cannot be printed out in a color expected by the user - the user tries to realize a desired tint primarily by using one of the following two methods. The first method is to convert the image on a monitor to the desired tint by using image retouch software, for example. The second method is to adjust color processing of the printer by the user so as to print the image in the desired tint. However, the first method requires the user to learn the function and the operation of the image retouch software and to perform color conversion in consideration of both the color reproduction of the monitor and the color reproduction of the printer. Thus, the first method requires knowledge at a very high level. The second method requires the user to learn the function and the operation of a color-adjustment user interface which is provided by a printer driver, and to have knowledge regarding the color reproduction of the printer and general image processing. Stated another way, when one of those two methods is employed, the user has to adjust the tint by repeating the adjustment on a trial and error basis until a print having the desired tint is obtained.

As described above, there is a demand for a system which is easy to use even for a user not having expert knowledge with regards to printers, and which can realize optimum printing for a requested combination of printer and paper.

Japanese Patent Laid-Open No. 2001-346054 describes a technique of forming a profile through the steps of obtaining an ink duty value which is prepared in advance, and correcting the existing profile based on the obtained ink duty value.

With the related art, however, because the color development characteristic of a paper for which the profile is not prepared is unknown and optimum color separation cannot be performed, there is a possibility that the printing purpose to match with the paper is not reliably achieved, or that the image cannot be printed out in a color expected by the user.

SUMMARY OF THE INVENTION

The present invention enables an optimum profile to be quickly formed for any category of printing medium. Also, the present invention provides a profile forming method which can obtain a satisfactory print even when a printer user prints an image on a printing medium that is not supported in the printer maker's specifications. The satisfactory print includes neither scattering nor a blur of ink, keeps the user from observing a discontinuity of color in, e.g., a gradation image, and ensures color reproduction in a color expected by the user. In other words, the obtained print reflects the color reproduction characteristic appearing in an environment where an output image is actually observed, and it realizes proper color reproduction regardless of the observation environment.

The present invention in its first aspect provides a profile forming method as specified in claims 1 to 20.

The present invention in its second aspect provides a profile forming program as specified in claim 21.

The present invention in its third aspect provides a printing system as specified in claim 23 or 24.

Further features of the present invention will become apparent from the following description of exemplary embodiments with reference to the attached drawings.

BRIEF DESCRIPTION OF THE DRAWINGS

The accompanying drawings, which are incorporated in and constitute a part of the specification, illustrate embodiments of the invention and, together with the description, serve to explain the principles of the invention.

Fig. 1 is a block diagram of an image printing system according to a first embodiment of the present invention.

Fig. 2 is a flowchart showing a processing flow in the image printing system according to the first embodiment.

Fig. 3 illustrates one example of a user interface for use in a now profile forming process according to the first embodiment.

Fig. 4 is a block diagram of a printer driver for use in the image printing system according to the first embodiment of the present invention.

Fig. 5 illustrates one example of a user interface for the printer driver in the present invention.

Fig. 6 shows one exemplary list of paper categories in the present invention.

Fig. 7 illustrates a data structure of a default profile storage unit in the present invention.

Fig. 8 is a block diagram of an image printing system according to a second embodiment of the present invention.

Fig. 9 is a block diagram of an image printing system according to a third embodiment of the present invention.

Fig. 10 is a flowchart showing a flow of a total colorant amount determining process in the present invention.

Fig. 11 illustrates one example of a total colorant amount determining patch for use in the present invention.

Fig. 12 illustrates another example of the total colorant amount determining patch for use in the present invention.

Fig. 13 is a flowchart showing a flow of a color separation profile forming process in the present invention.

Fig. 14 is a flowchart showing a flow of a color matching profile forming process in the present invention.

Fig. 15 is a graph showing one example of a color separation profile for use in the present invention.

Fig. 16 is a graph showing another example of the color separation profile for use in the present invention.

Fig. 17 is a graph showing one example of light source information held in a light source information database.

Fig. 18 illustrates one example of a user interface for setting details of light sources in a now profile forming process according to the first embodiment.

Fig. 19 is a graph showing the relationship between gradation change and category/usage of inks with respect to printing quality.

Fig. 20 is a graph showing the relationship between gradation change and category/usage of inks with respect to printing quality.

DESCRIPTION OF THE EMBODIMENTS

Several embodiments of the present invention will be described below in detail in accordance with the accompanying drawings.

First Embodiment

A first embodiment of the present invention is now described with reference to the drawings.

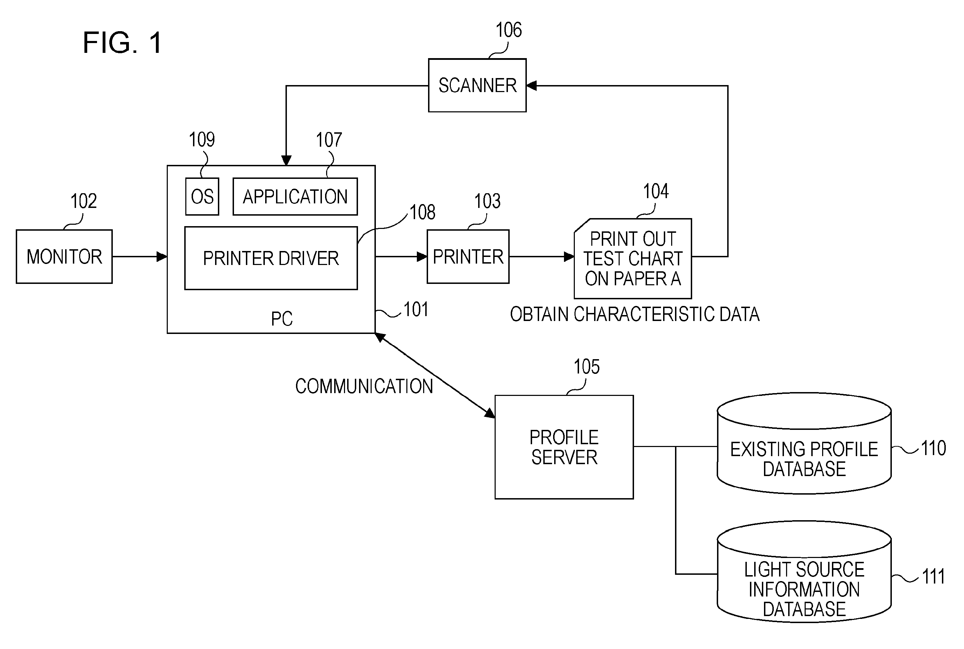

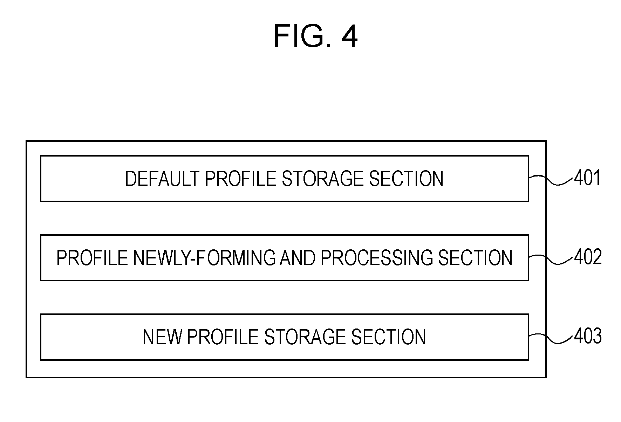

Figs. 1 and 4 are block diagrams of an image printing system according to the first embodiment of the present invention. The image printing system includes a PC 101 for executing control, an image display apparatus 102, such as a monitor, for displaying an image, and an image forming apparatus 103, such as a printer, for printing an image. Reference numeral 104 denotes a test chart printed by the printer 103 using paper on which a user wants to print an image. The test chart 104 is a print on which image data is printed in, e.g., 9 stages for each of RGB (729 colors in total). Herein, the image data is desired to be capable of providing a color reproduction characteristic under a printing environment (including a printer and paper) in which the user wants to print an image. The image printing system further includes a profile server 105 for supplying a printer profile to a printer driver via a communication path, and an image input device 106, such as a scanner, for inputting an image. The control PC 101 incorporates an image processing application 107 for displaying and editing an image on the PC 101, a printer driver 108 for controlling and driving the printer 103, and an OS (Operating System) 109 for operating the PC 101 itself. Reference numeral 110 denotes an existing profile database holding printer/paper profile data that is supported by the printer driver. Reference numeral 111 denotes a light source information database holding spectral distribution information of light sources which are expected to be used when users observe prints.

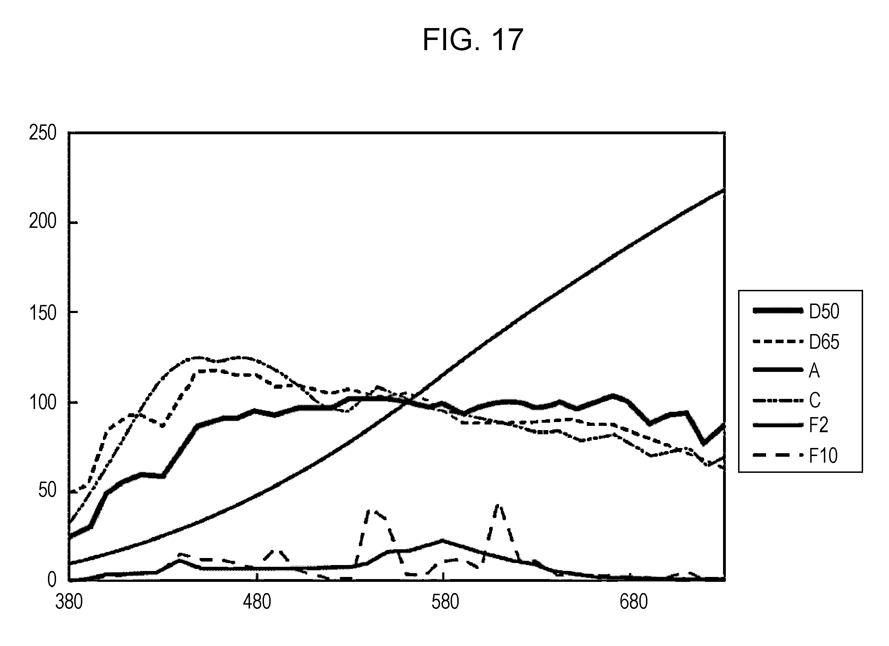

Details of the light source information database 111 will now be described with reference to Fig. 17. Fig. 17 is a graph showing, by way of example, spectral distributions $S(\lambda)$ of various light sources represented by D50, D65, A, C, F2, and F10 with respect to wavelength. It is here assumed that the light source information database 111 holds the spectral distributions $S(\lambda)$ shown in Fig. 17.

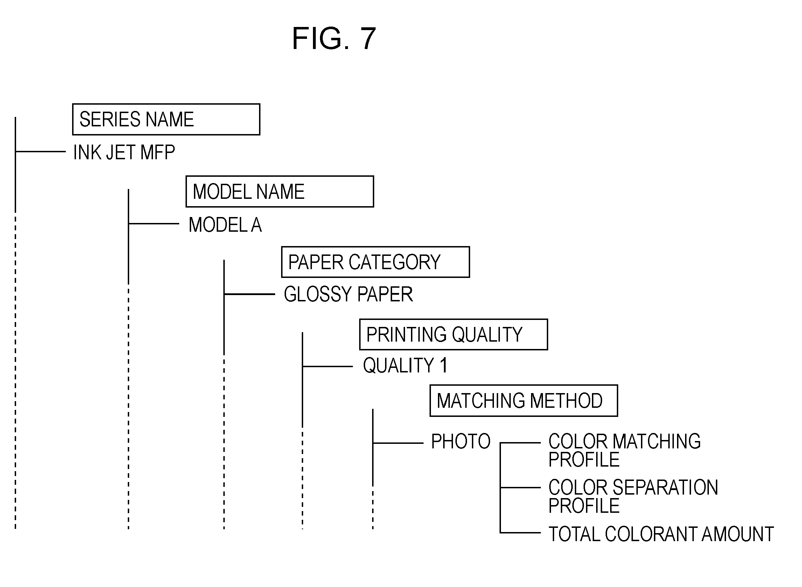

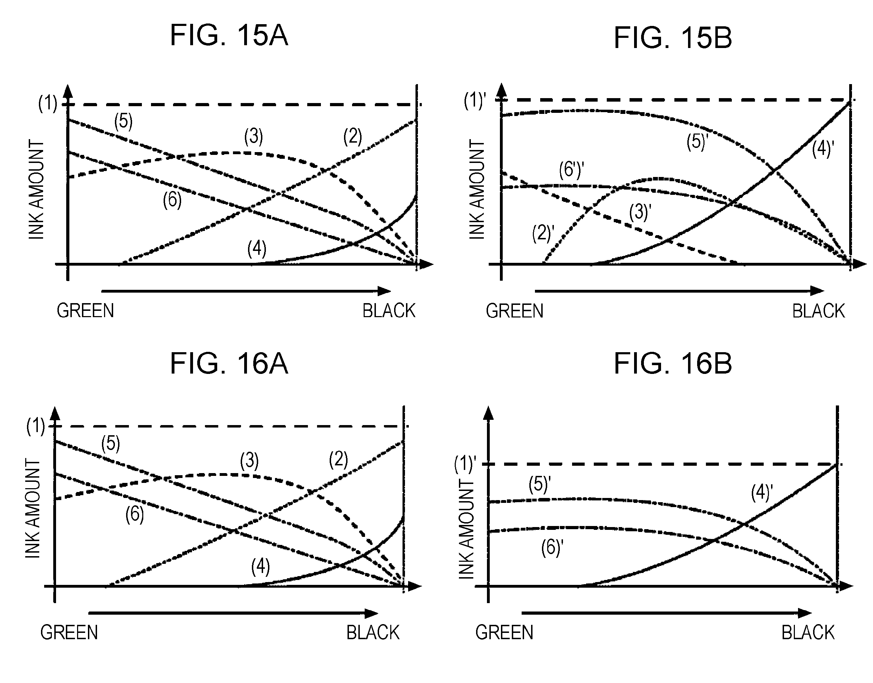

The existing profile database 110 has a data structure, shown in Fig. 7, which holds three profiles for each of the printer series, the model, the paper category, the printing quality, and the matching method. Herein, the three profiles include a color matching profile, a color separation profile, and a total colorant amount. The reason why the profiles are prepared for each printer model is that ink characteristics, the number of ink colors, the amount of ejected ink, etc. differ from printer to printer. The reason why the profiles are prepared for each paper category is that, the number of kinds of inks, respective amounts of ink used, and ratios of the inks used, etc. greatly differ for each paper category even when the same printer is employed. Figs. 15 and 16 show the ink amounts required in glossy paper, art paper, and plain paper depending on gradation from green to black. More specifically, Fig. 15 shows the ink amounts required for glossy paper (Fig. 15A) and art paper (Fig. 15B), in which the maximum colorant amount is the same as indicated by (1) and (1)', depending on gradation from green to black. As seen from Fig. 15, the glossy paper and the art paper employ the same ink colorants and the same number of kinds of inks ((2) to (6) and (2)' to (6)'), but they differ from each other in the usage of the inks (such as the ink amounts and how the ink amounts are changed). In other words, since the usage of the inks differs depending on the paper category, the usage of the inks for each paper category can be effectively selected by storing the existing profile for each paper category and referring to the stored profile whenever a profile for a new category of paper is formed. Fig. 16 shows the ink amounts required for glossy paper (Fig. 16A) and plain paper (Fig. 16B) depending on gradation from green to black. As seen from Fig. 16, five kinds of inks (2) to (6) are used for the glossy paper, while only three kinds of inks (4)', (5)' and (6)' are used for the plain paper. In other words, since the number of kinds of ink differs depending on the paper category, the kinds of ink to be used for each paper category can be effectively selected by storing the existing profile for each paper category and referring to the stored profile whenever a profile for a new category of paper is formed.

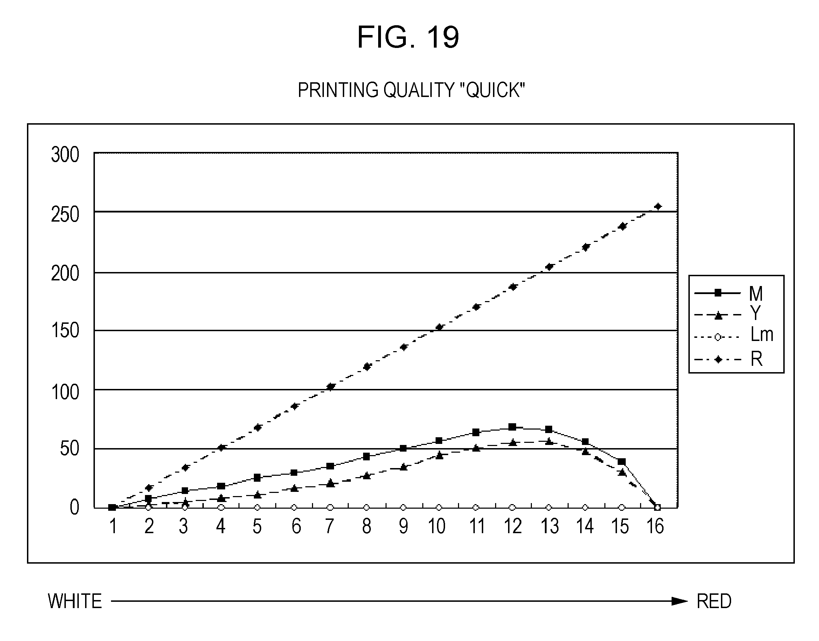

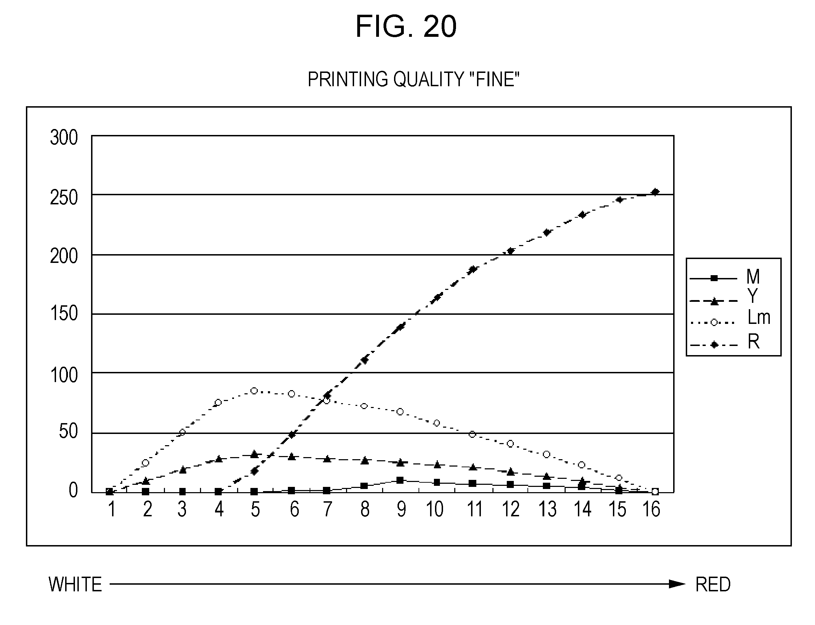

The reason why the profiles are prepared for each item of printing quality is that the kinds of inks and the usage of the inks differ for each item of printing quality. There are plural items of printing quality, such as "quick" and "fine". In an ink jet printer, for example, the printing quality "quick" can be improved by printing an image with one path so as to reduce the number of paths required for printing of the entire printing medium and/or by increasing the printing speed. In that case, because larger amounts of inks are printed on the printing medium at a time, there is a possibility of causing a phenomenon of the so-called beading that adjacent dots are attracted to each other and graininess appears in the printed image. This means the necessity of setting the total colorant amount to a different value for each item of printing quality. Figs. 19 and 20 are graphs showing the relationship between gradation change and category/usage of inks with respect to printing quality "quick" (Fig. 19) and "fine" (Fig. 20). In each graph, the horizontal axis represents gradation change from white to red, and the vertical axis represents the total colorant amount. In the printing quality "quick" shown in Fig. 19, for example, the total colorant amount is reduced as compared with the printing quality "fine", taking into account the beading. In order to ensure a proper color density even with the reduction of the total colorant amount, however, light ink (Lm) is not used as one of the kinds of inks, and the amount of dark ink (M) is increased in Fig. 19. Further, looking at the usage of the inks, the dark ink starts to be used from near a value 1 of the gradation. On the other hand, in the printing quality "fine" shown in Fig. 20, the light ink (Lm) is also used as one of the kinds of inks, and the total colorant amount is increased as compared with the printing quality "quick" in Fig. 19 corresponding to the reduction in printing speed. Further, looking at the usage of the inks, the dark ink (M) starts to be used from near a value 4 of the gradation in consideration of the use of the light ink. Thus, since the kinds of inks and the usage of the inks differ depending on the printing quality, the kinds of inks and the usage of the inks for each item of the printing quality can be effectively utilized for a new profile, by preparing and storing the profile that specifies the kinds of inks and the usage of the inks for each item of the printing quality. Note that the printing quality factor is not limited to the field of ink jet printers.

Fig. 4 is a block diagram showing details of the printer driver 108 shown in Fig. 1. The printer driver 108 includes a default profile storage section 401 for storing a color conversion profile that is previously stored in the printer driver 108. The printer driver 108 further includes a new profile forming and processing section 402 for forming a new profile in conformity with a user's requirements, and a new profile storing section 403 for storing, in the printer driver 108, the new profile which has been formed in the new profile forming and processing section 402.

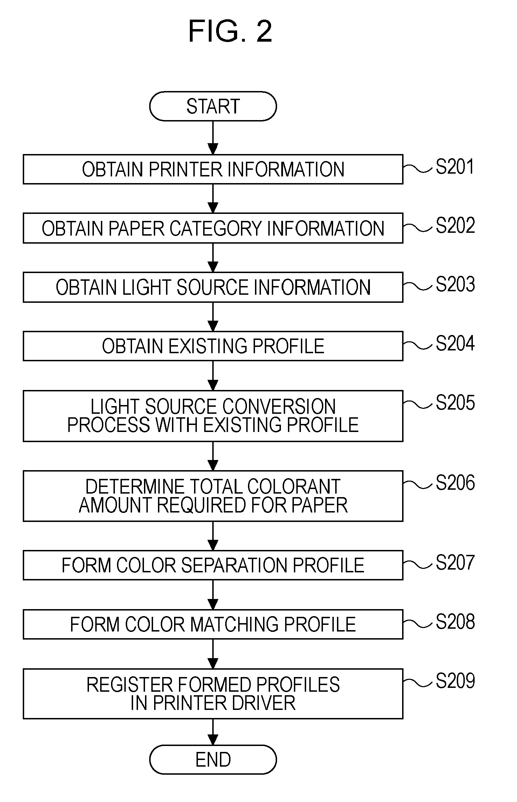

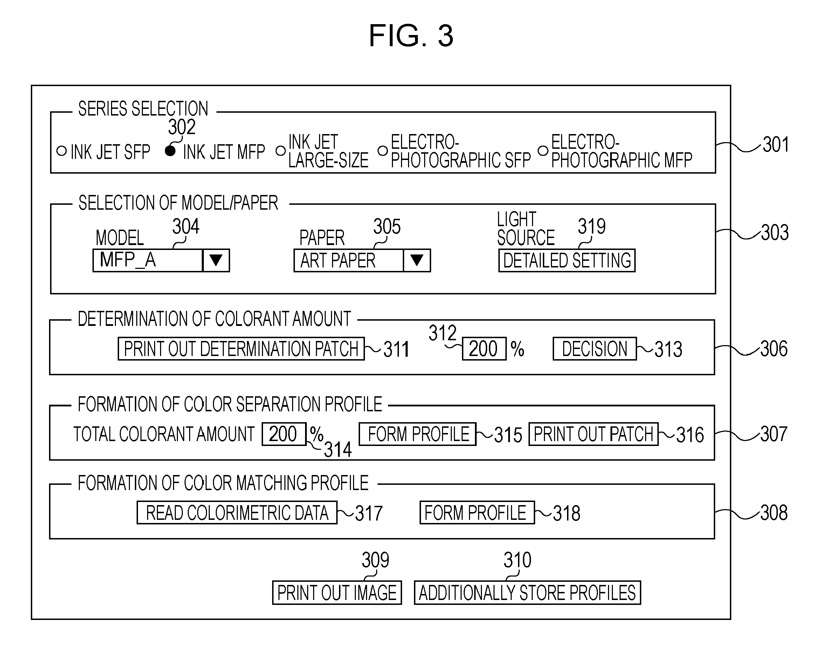

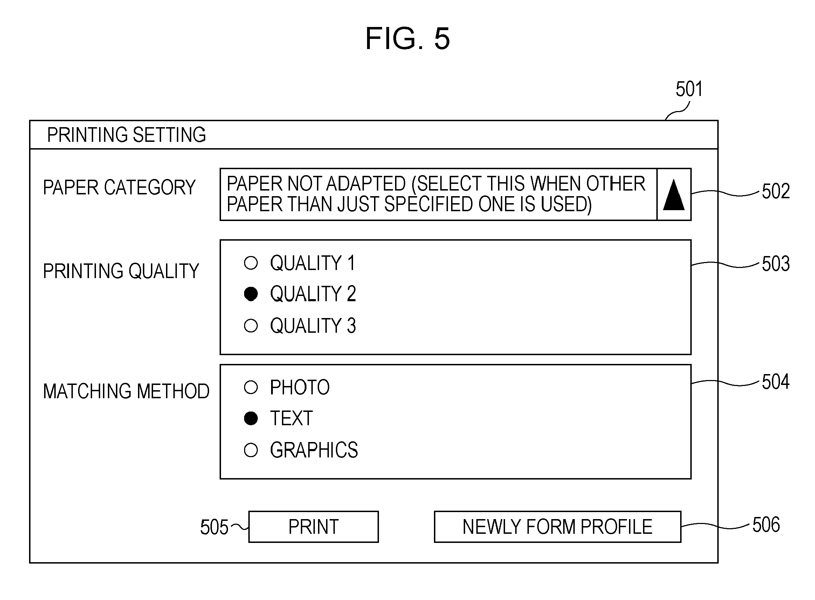

Next, an outline of a profile forming process will be described with reference to the user interfaces (UIs) of Figs. 3 and 5 and the flowchart of Fig. 2. Fig. 5 illustrates one example of a printing setting UI used to make settings on the printer side when a "print" menu is selected from a menu list of the application 107. A method for operating a printing setting screen when a printer user wants to print an image on paper supported in the maker's specifications will now be described. On a printing setting screen 501, the printer user performs a series of operations of selecting a paper category 502, printing quality 503, and a matching method 504, and pressing a "print" button 505. When the user wants to print an image on other paper than that supported in the maker's specifications, setting operations on the printing setting screen 501 are performed as follows. In setting of the paper category 502, an option item "paper not adapted" is selected. When the option item "paper not adapted" is selected, the "print" button 505 is made ineffective. Thereafter, the user selects the printing quality 503 and the matching method 504 and then presses a "newly form profile" button 506. A UI screen, shown in Fig. 3, for setting conditions to form a profile is opened in response, and the processing shown in the flowchart of Fig. 2 is started.

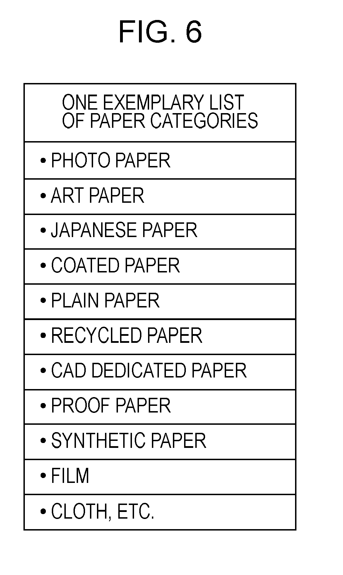

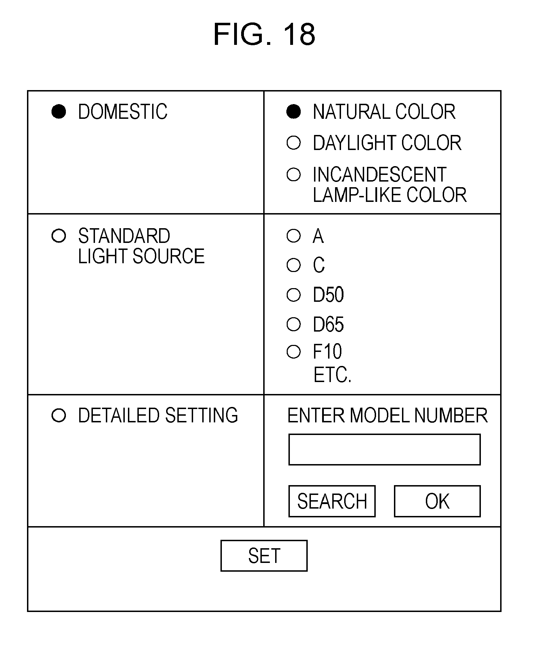

In step S201, when a proper item is selected from each of a "series selection" box 301 and a "model/paper selection" box 303 of the UI shown in Fig. 3, the model name of the printer employed by the user is obtained. More specifically, in this process, the user first selects the printer, which is employed by the user, in the "series selection" box 301 of the UI shown in Fig. 3 by checking one of radio buttons 302. Next, on a pull-down menu 304 in the "model/paper selection" box 303, the user selects one from a list of models corresponding to the printer series selected by checking one of the radio buttons 302. In step S202, on a pull-down menu 305 in the "model/paper selection" box 303 of the UI shown in Fig. 3, the user selects paper belonging to the same category as the paper that the user wants to use. The selection of paper is performed by displaying, to the user, a list of paper categories corresponding to the printer series, which has been selected by checking one of the radio buttons 302, so that the user can select one desired paper category on a pull-down menu. To that end, the pull-down menu 305 of the UI shown in Fig. 3 displays a list of the paper categories corresponding to the printer model which has been selected by the user from the radio buttons 302 and the pull-down menu 304. Fig. 6 shows one exemplary list of the paper categories. In step S203, when a "detailed setting" button 319 for the light source, shown in Fig. 3, is pressed, a UI shown in Fig. 18 is displayed. In the UI of Fig. 18, the user selects "domestic (fluorescent lamp)", "standard light source", or "detailed setting" in a left column of the displayed screen, and then proceeds to a right column of the displayed screen. When the user selects "domestic" in the left column of the screen, the user is further prompted to select one light source from among "natural white color", "daylight color", and "incandescent lamp-like color" in the right column. With that selecting operation, the corresponding light source information stored in the light source information database 111 is obtained. Similarly, when the user selects "standard light source", the user is further prompted to select one light source from among "A", "C", "D50", "D65", "F10", etc. With that selecting operation, the corresponding light source information is obtained. When the user selects "detailed setting" on the left side of the screen of Fig. 18, the user is further prompted to enter the model number of an illuminator that is expected to be used as the light source when the user observes a print. With that selecting operation, the corresponding light source information stored in the light source information database 111 is obtained. In step S204, a profile corresponding to the printer and paper characteristics obtained in steps S201 and S202 (more specifically, the name of the printer series, the model name, the category of paper to be used in the printing, the printing quality, and the matching method) is obtained from the profile server 105, shown in Fig. 1, which stores various profiles in advance. In step S205, a light source conversion process with the existing profile is executed by using the light source information obtained in step S203 and the existing profile obtained in step S204. In the light source conversion process of step S203, values of CIE XYZ are calculated based on the following formulae (1) to (3) by using a spectral distribution $S(\lambda)$ obtained in step S203, a spectral reflectance $R(\lambda)$ in the existing profile obtained in step S204, and color matching functions $x(\lambda)$, $y(\lambda)$ and $z(\lambda)$ defined in Japanese Industrial Standard JIS 28782:

$$X = \int R(\lambda)S(\lambda)x(\lambda) \qquad \dots(1)$$

$$Y = \int R(\lambda)S(\lambda)y(\lambda) \qquad \dots(2)$$

$$Z = \int R(\lambda)S(\lambda)z(\lambda) \qquad \dots(3)$$

From those values of X, Y and Z, values of CIE LAB are calculated based on the conversion formulae defined in JIS Z8729.

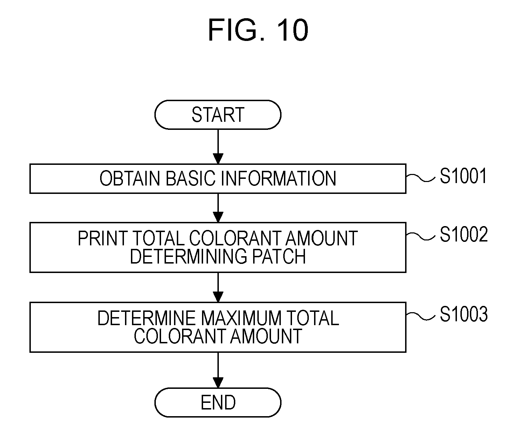

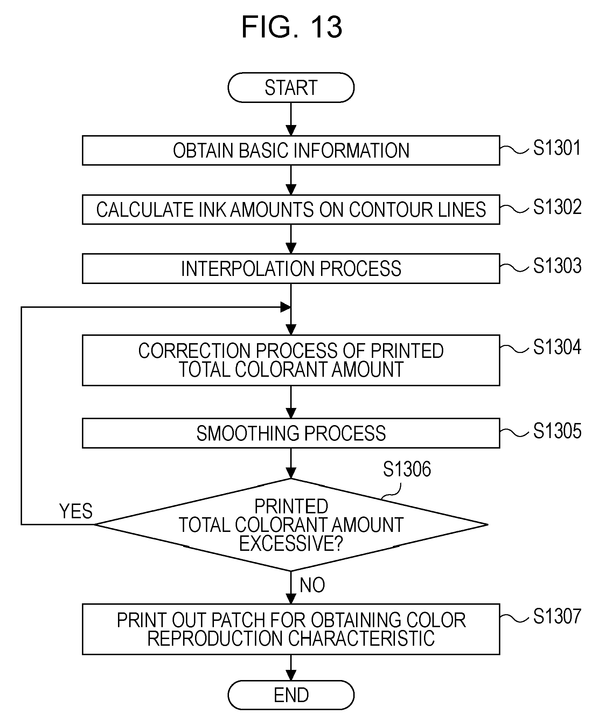

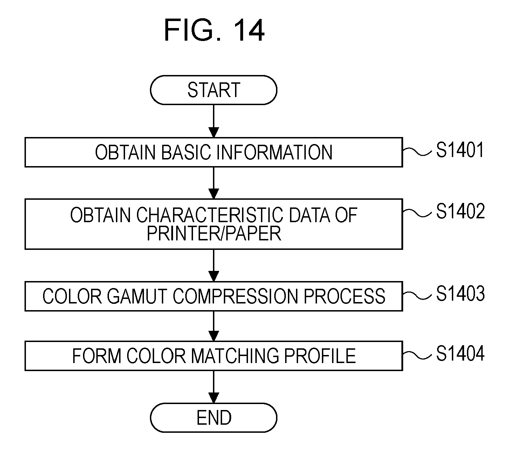

In step S206, when the user presses a "print out determination patch" button 311 in Fig. 3, a process of determining the total colorant amount under the printing conditions requested by the user is started. Details of the total colorant amount determining process will be described later with reference to Fig. 10. In step S207, when the user presses a "form profile" button 315 in Fig. 3, a color separation profile optimum for the total colorant amount obtained in step S204 is formed. Details of this color separation profile forming process will be described later with reference to a flowchart of Fig. 13. In step S208, a color matching profile for executing color gamut conversion similar to that executed by the existing profile is formed by using the color separation profile which has been formed in step S207. Details of this color matching profile forming process will be described later with reference to Fig. 14. In step S209, the profiles formed in steps S207 and S208 are registered in the printer driver 108.

With the processing described above, the profiles for a new category of paper can be formed.

<Total Colorant Amount Determining Process>

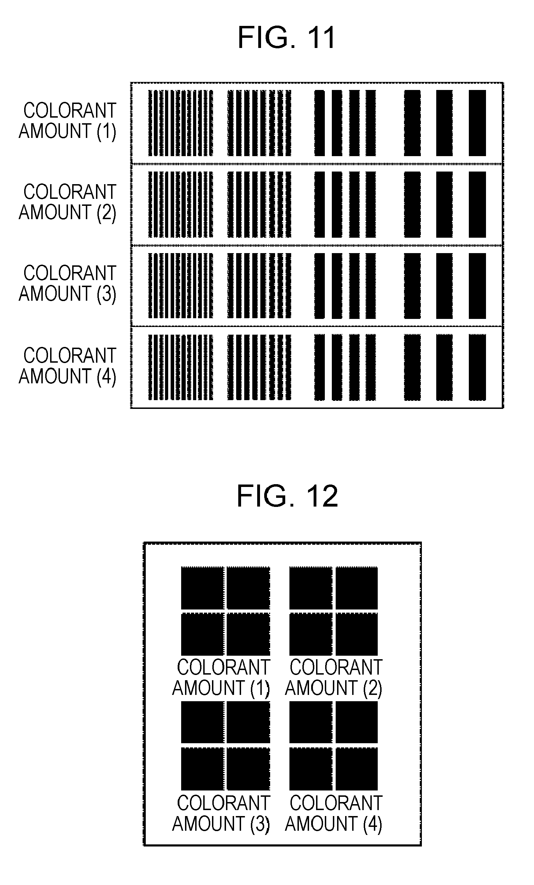

Details of the total colorant amount determining process in step S206 of Fig. 2 will now be described with reference to the flowchart of Fig. 10 and patches shown in Figs. 11 and 12.

In step S1001, basic information represented by a primary color correction table, binary conversion parameters, a maximum value of the colorant amount for paper (printing medium), etc. is obtained based on the existing profile information which has been obtained in step S204. In step S1002, a total colorant amount determining patch for determining the total colorant amount for the paper is formed based on the basic information obtained in step S1001, and this patch is printed on the paper on which the user wants to print an image by the printer 103. As shown in Fig. 11, by way of example, the total colorant amount determining patch is represented by an image made up of non-printed portions and printed portions, each of those portions having a certain width, a certain level of the total colorant amount, and a different resolution (different number of lines). The printed portions and the non-printed portions are alternately positioned in a straight line. The total colorant amount determining patch printed here is not limited to the patch shown in Fig. 11. As another example, as shown in Fig. 12, the total colorant amount determining patch can also be printed in an image made up of non-printed portions arranged in a crossed shape and printed portions, each of those portions having a certain width and a certain level of the total colorant amount. The image can be printed in any desired shape so long as the printed portions and the non-printed portions are adjacent to each other. While the total colorant amount is shown in four levels in each of Figs. 11 and 12, the number of levels is not limited to four.

Next, in step S1003, a maximum total colorant amount for the paper on which the user wants to print an image is input based on the total colorant amount determining patch which has been printed in step S1002. In the case using the patch shown in Fig. 12, for example, the maximum total colorant amount is determined by the user reading, from the printed result of the total colorant amount determining patch, a limit at which the user can clearly discern the image in the non-printed portions in the crossed shape. The user enters the determined maximum total colorant amount in a text box 312, shown in Fig. 3, and then presses a "decision" button 313.

When the maximum total colorant amount is determined, it is better to prepare an index indicating how much a cross-shaped character is deformed. Also, the index can be formed so as to separately determine the degree of deformation between the case of printing text and the case of printing a photograph. Further, the maximum total colorant amount can also be automatically determined. In such a case, the printed patch image is read by the scanner 106, for example, and the non-printed portions in the crossed shape, shown in Fig. 12, are extracted and used to make the determination. As an alternative, the maximum total colorant amount can be automatically determined by mounting a sensor (not shown), such as a CCD, on the printer 103, reading the printed patch shown in Fig. 11, preparing sharpness data for each colorant amount, and by determining the maximum total colorant amount based on the sharpness data. A determination criterion in that case can be changed depending on whether a printing target is text or a photograph.

For example, a threshold can be set for each level of resolution corresponding to each of the text and the photograph, and the resolution can be changed in evaluating each of the text and the photograph.

The total colorant amount determining process can be executed as described above.

<Color Separation Profile Forming Process>

Details of the color separation profile forming process in step S207 will now be described with reference to Fig. 13.

In step S1301, the existing color separation profile corresponding to the printing conditions requested by the user (such as the model, the paper category, the printing quality, and the matching method) is obtained based on the existing profile information which has been obtained in step S204. Herein, the term "color separation profile" means a lookup table in which an ink amount is described for each grid point distributed over a grid in the form of an RGB three-dimensional cube. In step S1302, color separation values are calculated on contour lines while keeping the total colorant amount calculated in step S206 and the characteristics of the existing color separation profile obtained in step S1301. Herein, the term "contour lines" means a W-Bk line, a R-Bk line, a G-Bk line, a B-Bk line, a C-Bk line, a M-Bk line, a Y-Bk line, a R-W line, a G-W line, a B-W line, a C-W line, a M-W line, and a Y-W line which interconnect respective colors represented by the apexes of the RGB three-dimensional cube. Adjustment of the colorant amounts in step S1302 is performed, for example, by placing more importance to dark ink when the user intends to widen a color reproduction range, and by placing more importance to light ink when the user intends to reduce graininess. In step S1303, an interpolation process is executed to calculate a color on each grid point of the RGB three-dimensional cube through an interpolation by using the color separation values on the contour lines which have been calculated in step S1302. In step S1304, the total colorant amount in the color separation profile formed through the processing up to step S1303 is corrected. More specifically, the correction process of adjusting the total colorant amount is executed such that the total colorant amount corresponding to the color separation values represented by the respective grid points in the color separation profile, which has been formed through the processing up to step S1303, is held within the total colorant amount calculated in step S206. Note that the correction method is not limited to the above-described one and other general correction methods can be used as an alternative. In step S1305, a smoothing process is executed to smooth the color separation profile which has been formed through the processing up to step S1304. In step S1306, it is checked whether the total colorant amount corresponding to the color separation values represented by the respective grid points in the color separation profile, which has been formed through the processing up to step S1305, exceeds the total colorant amount calculated in step S206. If so, the processing flow is returned to step S1304, and if not so, the processing flow advances to the next process (step S1307).

Thus, based on the existing profile information which has been obtained in step S204, the color separation profile corresponding to the printing conditions requested by the user (such as the model, the paper category, the printing quality, and the matching method) can be obtained.

In step S1307, when the user presses a "print out patch" button 316 shown in Fig. 3, a patch for obtaining the color reproduction characteristic is printed using the formed color separation profile in order to form a color matching profile described later. The patch can be prepared as digital data which represents RGB in 9 stages for each of RGB (729 colors in total), for example, and which can provide the color reproduction characteristic under the environment where the user wants to print an image.

<Color Matching Profile Forming Process>

Details of the flow of the color matching profile forming process in step S208 will now be described with reference to Fig. 14.

In step 1401, the existing color matching profile corresponding to the printing conditions requested by the user (such as the model, the paper category, the printing quality, and the matching method) is obtained based on the existing profile information which has been obtained in step S204. The term "color matching profile" means data given in the form of colorimetric data Lab when digital data RGB sent to the printer is printed under the above-described printing conditions, more specifically Lab values corresponding to the printing result of RGB data in 17 stages for each of RGB (4913 colors in total). In step S1402, when the user presses a "read colorimetric data" button 317 shown in Fig. 3, the Lab data is obtained by measuring the patch, which has been previously printed in step S1307 of Fig. 13, with the input device, e.g., the scanner 106, a colorimeter (not shown), or the like. In step S1403, when the user presses a "form profile" button 318 shown in Fig. 3, a color gamut compression process is executed such that the colors reproduced by the existing color matching profile, which has been obtained in step S1401, falls within the color reproduction range to be reproduced under the user-requested printing conditions which have been obtained in step S1402. The color gamut compression process described here is merely one example and the present invention is not limited to the above-described process. Depending on the demanded accuracy and purpose, the color gamut compression process can be modified, for example, such that the colors in the input color gamut are converted to colors which minimize color differences with respect to the colors within the printing color gamut. In step S1404, a color matching profile is formed by using the result of the color gamut compression process obtained in step S1403 and the user-requested printing conditions obtained in step S1402.

While this first embodiment is described as using Lab as a color space for processing, the present invention is not limited to the use of Lab. The color space can be of course changed depending on the demanded accuracy and purpose.

Thus, based on the existing profile information, the color matching profile corresponding to the printing conditions requested by the user (such as the model, the paper category, the printing quality, and the matching method) can be obtained.

Second Embodiment

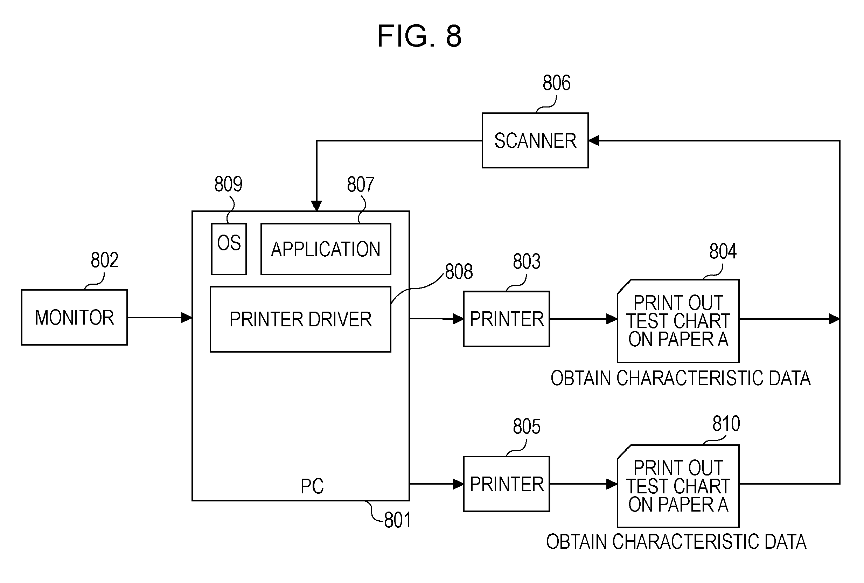

When professional cameramen and graphic artists produce works using a large format printer (denoted by 805 in Fig. 8), the paper cost is greatly increased and the printing time prolonged if several tens of prints are repeatedly printed on a trial-and-error basis. With the second embodiment of the present invention, such a problem can be avoided through the steps of first producing a scaled-down work using a small format printer (denoted by 803 in Fig. 8), and then forming a profile for the large format printer so as to provide the same color reproduction as that obtained with the small format printer.

The second embodiment will be described below with reference to Fig. 8.

Fig. 8 is a block diagram of an image printing system according to a second embodiment of the present invention. The image printing system includes a PC 801 for executing control, which is the same as the PC used in the image printing system according to the first embodiment. Also, the image printing system includes an image display apparatus 802, such as a monitor, for displaying an image, and image printing apparatuses 803 and 805, such as printers, for printing an image. Reference numeral 804 denotes a test chart printed by using the desired paper and the printer which is demanded by a user to finally print an image, i.e., the printer 803. Reference numeral 810 denotes a test chart printed by using the desired paper and the printer which is demanded by the user to print an image for testing of color reproduction, i.e., the printer 805. The test charts used in this second embodiment are each a print on which image data is printed as an RGB chart (e.g., 9 stages for each of RGB and 729 colors in total). Herein, the image data is desired to be capable of obtaining a color reproduction characteristic under a printing environment (including a printer and paper) in which the user wants to print an image. The image printing system further includes an image input device 806, such as a scanner, for inputting an image. The control PC 801 incorporates an image processing application 807 for displaying and editing an image on the PC 801, a printer driver 808 for controlling and driving the printers 803 and 805, and an OS (Operating System) 809 for operating the PC 801 itself. The processing flow in this second embodiment differs from that in the first embodiment as follows. While the existing profile is obtained from the profile server 105 in the first embodiment, it is obtained from the printer 805 via the PC 801 in this second embodiment. With such a feature, this second embodiment can form a profile for the printer 803, which can provide the same color reproduction as that obtained by the printer 805.

Thus, the paper cost and the printing time can be saved in comparison with the case where several tens of prints are repeatedly printed on a trial-and-error basis by a large format printer.

Third Embodiment

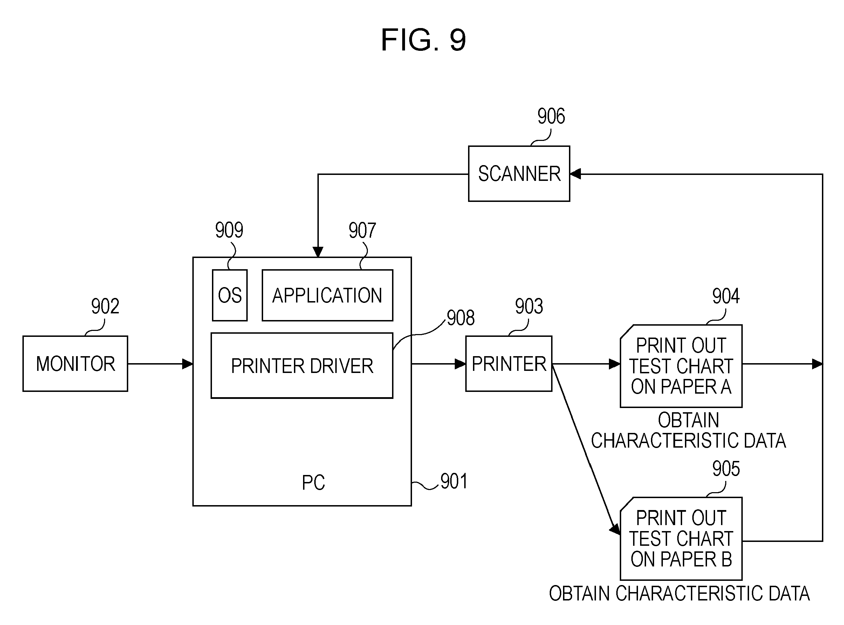

A third embodiment of the present invention can easily form a profile capable of providing the color reproduction characteristic of paper, which is ordinarily employed by a user, when another category of paper is employed. The third embodiment will be described below with reference to Fig. 9.

Fig. 9 is a block diagram of an image printing system according to a third embodiment of the present invention. The image printing system includes a PC 901 for executing control, which is the same as the PC used in the image printing system according to the first embodiment. Also, the image printing system includes an image display apparatus 902, such as a monitor, for displaying an image, and an image printing apparatus 903, such as a printer, for printing an image. Reference numerals 904 and 905 denote test charts printed by using the printer 903 in combination with different categories (A and B) of paper, which are demanded by a user to finally print an image. The test charts used in this third embodiment are each a print on which image data is printed as an RGB chart (e.g., 9 stages for each of RGB and 729 colors in total). Herein, the image data is desired to be capable of obtaining a color reproduction characteristic under a printing environment (including a printer and paper) in which the user wants to print an image. The image printing system further includes an image input device 906, such as a scanner, for inputting an image. The control PC 901 incorporates an image processing application 907 for displaying and editing an image on the PC 901, a printer driver 908 for controlling and driving the printer 903, and an OS (Operating System) 909 for operating the PC 901 itself.

The processing flow in this third embodiment differs in the following way. While the profile is obtained from the profile server 105 in the first embodiment and from the printer 805 via the PC 801 in the second embodiment, it is obtained from the test chart 904 printed using the paper A in this third embodiment. With such a feature, this third embodiment can easily form a profile capable of providing the color reproduction characteristic of the paper A (corresponding to the test chart 904), which is ordinarily employed by the user, when another category of paper B (corresponding to the test chart 905) is employed.

Other Embodiments

The present invention can be practiced in the form of a system comprising a plurality of units (e.g., a host computer, an interface device, a reader, and a printer), or a single unit (e.g., a copying machine or a facsimile).

While the above embodiments have been described on the assumption that the printing medium is paper, the printing medium is not limited to paper. An OHP or a CD-ROM having a label surface can also be used as the printing medium.

While the above embodiments have been described in connection with a printer using ink as a colorant, the application field of the present invention is not limited to such a printer. The present invention can also be applied to, for example, a copying machine using toner as a colorant.

The present invention can also be practiced by supplying a storage medium, which stores program code of software for implementing the functions of the above-described embodiments, to a system or an apparatus, and by causing a computer (CPU or MPU) in the system or the apparatus to read and execute the program code stored in the storage medium. In that case, the program code read out of the storage medium serves in itself to implement the functions of the above-described embodiments, and therefore the storage medium storing the program code constitutes the present invention.

Storage media for supplying the program code can be, e.g., a flexible disk, a hard disk, an optical disk, a magneto-optical disk, a CD-ROM, a CD-R, a magnetic tape, a nonvolatile memory card, or a ROM.

Also, the present invention involves not only the case where the functions of the above-described embodiments are implemented by the computer executing the read program code, but also the case where an operating system or the like running in the computer executes a part of actual processing in accordance with instructions from the program code and implements the functions of the above-described embodiments through the processing executed by the operating system or the like.

Further, the program code read out from the storage medium can be written in a memory which is provided in a function extension board inserted in the computer or in a function extension unit connected to the computer, and a part or the whole of the actual processing can be executed by a CPU, which is incorporated in the function extension board or the function extension unit, in accordance with the instructions from the program code. Thus, the present invention involves the case where the functions of the above-described embodiments are implemented through the processing executed by the CPU.

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures and functions.

**Claims**

1. A profile forming method for use in an image forming system, comprising:

   obtaining a category of a printing medium;
   obtaining a profile corresponding to the category of the printing medium;
   obtaining a total colorant amount corresponding to the printing medium; and
   forming another profile adapted for the printing medium based on both the profile obtained in the profile obtaining step and the total colorant amount.

2. A method as claimed in claim 1, wherein the category of printing medium is at least one member of the group consisting of glossy paper, art paper, and plain paper.

3. A method as claimed in claim 1 or claim 2, wherein the printing medium has a different color development characteristic for each category of the printing medium.

4. A method as claimed in any preceding claim, wherein the printing medium has a different total colorant amount for each category of the printing medium.

5. A method as claimed in claim 4, wherein the profile differs for each category of the printing medium.

6. A method as claimed in any one of claims 1 to 5, wherein the profile differs according to printing quality.

7. A method as claimed in any one of claims 1 to 6, wherein the profile differs according to for each kind of colorant.

8. A method as claimed in any one of claims 1 to 7, wherein the profile is a color separation profile for color separation of input data to a signal for a colorant used in a printing apparatus (103; 803, 805; 903).

9. A method as claimed in any one of claims 1 to 8, wherein the profile includes a color matching profile for making a color gamut of input data and a color gamut of a printing apparatus corresponding to each other, and a color separation profile for color separation of the input data to a signal for a colorant used in the printing apparatus.

10. A method as claimed in any one of claims 8 and 9, wherein the color separation profile differs in usage of the colorant depending on the category of the printing medium.

11. A method as claimed in claim 10, wherein the color separation profile is a lookup table storing the signal for the colorant for each grid point distributed over a grid of an RGB three-dimensional cube.

12. A method as claimed in any one of claims 1 to 11, wherein the total colorant amount is a colorant amount acceptable to the printing medium.

13. A method as claimed in any one of claims 1 to 12, wherein the total colorant amount is decided based on an arbitrary input numerical value.

14. A method as claimed in any one of claims 1 to 13, wherein the profile forming step forms the other profile by correcting the profile obtained in the profile obtaining step such that the total colorant amount is maintained.

15. A method as claimed in any one of claims 11 to 14, wherein the profile forming step forms the other profile by calculating a colorant amount on each of a plurality of frame lines, which are defined as lines which interconnect apexes of the RGB three-dimensional cube.

16. A method as claimed in any one of claims 1 to 15, wherein the profile forming step forms the other profile with importance placed on graininess and color reproduction.

17. A method as claimed in any one of claims 1 to 16, wherein the profile forming step forms the other profile based on the kind and usage of the colorant.

18. A method as claimed in any one of claims 1 to 17, further comprising:

    obtaining light source information; and
    converting the obtained profile based on the light source information.

19. A method as claimed in any one of claims 1 to 18, further comprising:

    a color gamut obtaining step of obtaining a color gamut of the printing apparatus based on the other formed profile;
    a color matching profile obtaining step of obtaining a color matching profile for the profile obtaining in the profile obtaining step; and
    a color matching profile forming step of forming a color matching profile corresponding to the printing medium, as a printing target, based on both the color gamut obtained in the color gamut obtaining step and a color gamut conversion method obtained in the color matching profile obtaining step.

20. A method as claimed in claim 19, wherein the color gamut obtaining step comprises:

    a printing step of printing a color gamut obtaining patch; and
    a colorimetric step of measuring colors of the color gamut obtaining patch printed in the printing step,

wherein a color gamut of the other formed profile is obtained from results of the color measurements executed in the colorimetric step.

21. A computer program which when loaded into a computer and executed performs a method as claimed in any preceding claim.

22. A machine readable storage medium storing a program as claimed in claim 21.

23. A printing system comprising:

    category obtaining means (303, 501) configured to obtain a category of printing medium;
    profile obtaining means (101; 801; 901, 105) configured to obtain a profile corresponding to the category of the printing medium;
    total colorant amount obtaining means (101; 801; 901, 103; 805; 903, 104; 810; 905, 306) configured to obtain a total colorant amount corresponding to the printing medium; and
    profile forming means (101; 801; 901, 307, 308) configured to form another profile adapted for the printing medium based on both the profile obtained by the profile obtaining means and the total colorant amount.

24. A printing system as claimed in claim 23, wherein the category of printing medium is at least one member of the group consisting of glossy paper, art paper, and plain paper.

FIG. 1

# FIG. 2

START

OBTAIN PRINTER INFORMATION — S201

OBTAIN PAPER CATEGORY INFORMATION — S202

OBTAIN LIGHT SOURCE INFORMATION — S203

OBTAIN EXISTING PROFILE — S204

LIGHT SOURCE CONVERSION
PROCESS WITH EXISTING PROFILE — S205

DETERMINE TOTAL COLORANT
AMOUNT REQUIRED FOR PAPER — S206

FORM COLOR SEPARATION PROFILE — S207

FORM COLOR MATCHING PROFILE — S208

REGISTER FORMED PROFILES
IN PRINTER DRIVER — S209

END

# FIG. 3

SERIES SELECTION
○ INK JET SFP  ● INK JET MFP  ○ INK JET LARGE-SIZE  ○ ELECTRO-PHOTOGRAPHIC SFP  ○ ELECTRO-PHOTOGRAPHIC MFP  — 301

SELECTION OF MODEL/PAPER
MODEL 304 [MFP_A ▼]   PAPER 305 [ART PAPER ▼]   LIGHT SOURCE 319 [DETAILED SETTING]  — 303

DETERMINATION OF COLORANT AMOUNT
[PRINT OUT DETERMINATION PATCH] ~311   312 [200] %   [DECISION] ~313  — 306

FORMATION OF COLOR SEPARATION PROFILE
TOTAL COLORANT AMOUNT [200] % 314   [FORM PROFILE] ~315   [PRINT OUT PATCH] ~316  — 307

FORMATION OF COLOR MATCHING PROFILE
[READ COLORIMETRIC DATA] ~317   [FORM PROFILE] ~318  — 308

309 [PRINT OUT IMAGE]   310 [ADDITIONALLY STORE PROFILES]

# FIG. 4

EP 1 887 787 A2

| |
|---|
| DEFAULT PROFILE STORAGE SECTION — 401 |
| PROFILE NEWLY-FORMING AND PROCESSING SECTION — 402 |
| NEW PROFILE STORAGE SECTION — 403 |

# FIG. 5

**PRINTING SETTING** — 501

| | |
|---|---|
| PAPER CATEGORY | PAPER NOT ADAPTED (SELECT THIS WHEN OTHER PAPER THAN JUST SPECIFIED ONE IS USED) ▲ — 502 |

PRINTING QUALITY — 503
- ○ QUALITY 1
- ● QUALITY 2
- ○ QUALITY 3

MATCHING METHOD — 504
- ○ PHOTO
- ● TEXT
- ○ GRAPHICS

505 — PRINT    NEWLY FORM PROFILE — 506

EP 1 887 787 A2

# FIG. 6

| ONE EXEMPLARY LIST OF PAPER CATEGORIES |
|---|
| • PHOTO PAPER |
| • ART PAPER |
| • JAPANESE PAPER |
| • COATED PAPER |
| • PLAIN PAPER |
| • RECYCLED PAPER |
| • CAD DEDICATED PAPER |
| • PROOF PAPER |
| • SYNTHETIC PAPER |
| • FILM |
| • CLOTH, ETC. |

# FIG. 7

SERIES NAME
INK JET MFP

MODEL NAME
MODEL A

PAPER CATEGORY
GLOSSY PAPER

PRINTING QUALITY
QUALITY 1

MATCHING METHOD
PHOTO
- COLOR MATCHING PROFILE
- COLOR SEPARATION PROFILE
- TOTAL COLORANT AMOUNT

EP 1 887 787 A2

# FIG. 8

MONITOR 802

PC 801
OS 809
APPLICATION 807
PRINTER DRIVER 808

SCANNER 806

PRINTER 803

PRINT OUT TEST CHART ON PAPER A 804

OBTAIN CHARACTERISTIC DATA

PRINTER 805

PRINT OUT TEST CHART ON PAPER A 810

OBTAIN CHARACTERISTIC DATA

EP 1 887 787 A2

# FIG. 9

MONITOR — 902

PC — 901
- OS — 909
- APPLICATION — 907
- PRINTER DRIVER — 908

PRINTER — 903

SCANNER — 906

PRINT OUT TEST CHART ON PAPER A — 904
OBTAIN CHARACTERISTIC DATA

PRINT OUT TEST CHART ON PAPER B — 905
OBTAIN CHARACTERISTIC DATA

# FIG. 10

```
        ┌──────────────┐
        │    START     │
        └──────┬───────┘
               ▼
  ┌────────────────────────────────┐
  │    OBTAIN BASIC INFORMATION     │──── S1001
  └────────────────┬───────────────┘
                   ▼
  ┌────────────────────────────────┐
  │  PRINT TOTAL COLORANT AMOUNT    │──── S1002
  │      DETERMINING PATCH          │
  └────────────────┬───────────────┘
                   ▼
  ┌────────────────────────────────┐
  │    DETERMINE MAXIMUM TOTAL       │──── S1003
  │      COLORANT AMOUNT            │
  └────────────────┬───────────────┘
                   ▼
        ┌──────────────┐
        │     END      │
        └──────────────┘
```

## FIG. 11

COLORANT
AMOUNT (1)

COLORANT
AMOUNT (2)

COLORANT
AMOUNT (3)

COLORANT
AMOUNT (4)

## FIG. 12

COLORANT
AMOUNT (1)

COLORANT
AMOUNT (2)

COLORANT
AMOUNT (3)

COLORANT
AMOUNT (4)

# FIG. 13

START

OBTAIN BASIC INFORMATION — S1301

CALCULATE INK AMOUNTS ON CONTOUR LINES — S1302

INTERPOLATION PROCESS — S1303

CORRECTION PROCESS OF PRINTED TOTAL COLORANT AMOUNT — S1304

SMOOTHING PROCESS — S1305

S1306

PRINTED TOTAL COLORANT AMOUNT EXCESSIVE?

YES

NO

PRINT OUT PATCH FOR OBTAINING COLOR REPRODUCTION CHARACTERISTIC — S1307

END

# FIG. 14

```
        START

OBTAIN BASIC INFORMATION          ～S1401

OBTAIN CHARACTERISTIC DATA OF      ～S1402
      PRINTER/PAPER

COLOR GAMUT COMPRESSION PROCESS    ～S1403

FORM COLOR MATCHING PROFILE        ～S1404

         END
```

FIG. 15B

FIG. 16B

FIG. 15A

FIG. 16A

FIG. 17

# FIG. 18

| ● DOMESTIC | ● NATURAL COLOR<br>○ DAYLIGHT COLOR<br>○ INCANDESCENT<br>LAMP-LIKE COLOR |
|---|---|
| ○ STANDARD<br>LIGHT SOURCE | ○ A<br>○ C<br>○ D50<br>○ D65<br>○ F10<br>ETC. |
| ○ DETAILED SETTING | ENTER MODEL NUMBER<br><br>  SEARCH    OK |
| SET | |

FIG. 19

# FIG. 20

PRINTING QUALITY "FINE"

WHITE ——————————————————→ RED

EP 1 887 787 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001346054 A

- JP 28782 A